# EUROPEAN PATENT APPLICATION

(11) **EP 1 290 943 A1**
(43) Date of publication of application: **12.03.2003**
(21) Application number: 02078085.4
(22) Date of filing: 29.07.2002
(51) Int. Cl.: A01N 33/12, C09D 1/04, C04B 28/26, C04B 41/50, B27K 3/52

(54) **Preservative for coating compositions**

(30) Priority: 07.09.2001 DE 10144187
(71) Applicant: Air Liquide Sante (International), 75341 Paris Cedex 07 (FR); SCHÜLKE & MAYR GMBH, 22851 Norderstedt (DE)
(72) Inventor: Beilfuss, Wolfgang, 22339 Hamburg (DE); Diehl, Karl-Heinz, 22844 Nordestedt (DE); Gradtke, Ralf, 25436 Tornesch (DE); Mangold, Herbert, 20251 Hamburg (DE); Siegert, Wolfgang, 25479 Ellerau (DE); Weber, Klaus, 20149 Hamburg (DE)
(74) Representative: Conan, Philippe Claude

(57) **Abstract**

Preservative for coating compositions, which preservative comprises
a) one or more quaternary ammonium compounds and
b) one or more alkalizing agents selected from amongst alkali metal hydroxide, alkali metal carbonate, alkali metal hydrogen carbonate, alkali metal silicate, alkaline earth metal oxide, alkaline earth metal hydrogen carbonate, alkaline earth metal hydroxide, alkaline earth metal silicate and Al(OH)₃, and preserved coating composition.

## Description

The invention relates to a preservative which inhibits the growth of fungi, algae and bacteria on or in coatings which are applied to alkaline or strongly alkaline substrates and/or which are alkaline or strongly alkaline themselves. In particular, the invention relates to preserved final coatings of external heat insulations and to preserved silicate-based coatings.

A series of biocidal (bactericidal, funcigidal and algicidal) active ingredients which, in general, afford good protection when employed on neutral or weakly alkaline substrates may be added to exterior and interior coating materials. Known biocides for this further publication are, for example, fungicides such as 2-methoxycarbonylaminobenzimidazole (carbendazim), 2-mercaptopyridine N-oxide (in particular the zinc salt: zinc pyrithion), n-octylisothiazolone (for example Kathon 893) and iodopropinyl butylcarbamate (IPBC), or algicides such as 1,1-dimethyl-3-(3,4-dichlorophenyl)urea (diuron), methylthio-4-t-butylamino-6-cyclopropylamino-s-triazine (Irgarol 1051, Mctt), and N²-tert-butyl-N⁴-ethyl-6-methylthio-1,3,5-triazine-2,4-diamine (terbutryn). These known biocides are described, inter alia, in the Laid-Open Specifications DE-A-42 42 389 and DE-A-197 05 085.

US-A-5 688 561 describes a coating process in which two different coating compositions composed of quaternary ammonium silicate, inorganic filler and water are applied to a substrate, the two coating compositions differing with regard to the amount of the components. The coating method is finished by curing at ambient temperature or at higher temperatures. The coatings obtained are said to be stable up to 1000°C.

DE-A-41 22 962 discloses a preparation for preventing the biogenic H₂SO₄ corrosion of building materials, which preparation is characterized by a content of a C₁₂-C₁₄-fatty-alkyldimethylbenzylammonium- and/or benzyl-dodecylbis(hydroxyethyl)ammonium-S-[2-(aminocarbonyl)-phenyl]thiosulphuric acid salt. In this application, the active ingredients afford their optimum effect in the slightly acidic range.

EP-A-0 328 335 describes a growth-inhibitory composition which can be used for coating equipment which is immersed in sea water, for example fishing nets and hulls, but also for protecting and preserving construction timber and shingles. The composition comprises partially crosslinked polymers and copolymers of vinyl compounds and 10 to 30% by weight of selected quaternary ammonium compounds.

DE-A-37 11 680 discloses that aqueous biocidal cationic synthetic polymer dispersions comprising specific quaternary ammonium compounds can be used as biocidal additives, preferably for the protection of timber or on exterior renders. The examples section of DE-A-37 11 680 describes that an emulsion paint or an exterior render can be coated with a dilute aqueous biocidal cationic synthetic polymer dispersion. A reliable fungicidal additive of dispersion-coated render or paint against Alternaria species, in particular upon prolonged immersion in water, cannot be found in DE-A-37 11 680. While the Laid-Open Specification generally mentions the use of the dispersions for the preparation of timber preservatives, emulsion paints, synthetic polymer renders and synthetic resin renders, the stability of the dispersions must be ensured in a complicated procedure at pH values of approximately 3.3 and by using protective colloids. In addition, the reader is warned against the use of the quaternary ammonium compounds in anionic dispersions, since the dispersion may coagulate when doing so. The use of quaternary ammonium compounds in preservatives for coating compositions which themselves are strongly alkaline (cement-bound renders or silicate renders) or on strongly alkaline substrates is not disclosed in DE-A-37 11 680.

When assembling a composite cell insulation system, an external wall (for example made of concrete) is, if appropriate, first equipped with a layer of lime render, to which the thermal insulating material (for example polystyrene, rock wool or glass wool) is attached. Onto this, an alkaline cement-bound reinforcing coat (pH > 13, main constituents cement and filler) is applied, into which, if appropriate, a glass fibre fabric is inserted as mechanical protection (first render). The manufacturer recommends a base coat (pH approximately 7) as the next layer. The base coat serves, inter alia, to improve adhesion, to buffer the alkalinity and to improve the covering ability. As the final coat, a neutral, synthetic-resin-bound render (binder for example straight acrylate or a mixture of styrene and acrylate in a weight ratio of 1 : 1) is applied. This neutral synthetic resin render which is conventionally used is susceptible to microbial growth and the consequences which this entails, such as discoloration and fouling, which is why for example the abovementioned fungicides carbendazim, zinc pyrithion, N-octylisothiazolone and isopropyl butylcarbamate and the algicides diuron, terbutryn and Irgarol 1051 or mixtures of these are added to it. The sandwich construction of thermal insulating systems is known and described, inter alia, in the publications of the Fachverband Wärmedämmverbundsysteme (WDVS e.V.) [Composite thermal insulating systems specialist association].

On the one hand, the last-mentioned biocides limit the choice of further additives in the synthetic resin render. Thus, for example, zinc pyrithion is broken down and leached at higher pH values with the formation of water-soluble components. The stability of these biocides decreases markedly, in particular upon prolonged contact with alkaline media. Frequently, however, not only an insufficient biocidal activity is observed, but undesired discolorations are also found. If, for example, these synthetic resin renders with conventional biocidal additives are employed directly on strongly alkaline substrates (such as, for example, on concrete or renders), the biocides fail since even the contact with strongly alkaline conditions leads to instability and hydrolysis of the biocides and thus to a susceptibility to microbial growth. The synthetic resin renders treated with these conventional biocides therefore require the abovementioned base coat. To inhibit microbial growth on a synthetic resin render applied to an alkaline substrate, also in the long term, it is also necessary to employ relatively large amounts of the abovementioned biocides.

It was therefore the object of the present invention to provide a preservative with a good bactericidal, fungicidal and algicidal action for use in neutral, weakly alkaline and strongly alkaline coating compositions, it being intended that the composition be particularly suitable for use on alkaline substrates.

The preservative is intended to have the following properties:
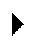 activity against bacteria, algae and fungi, in particular against Alternaria species;
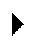 activity in the neutral, weakly alkaline and strongly alkaline pH range, i.e. in coatings which are applied to alkaline substrates or which themselves are strongly alkaline silicate renders; the preserving action must not be adversely affected, not even in the long term;
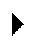 it must be readily incorporated into the coating material;
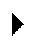 it must be compatible with the constituents of the composition, in particular with anionic components of the synthetic resin render (for example acrylates and polyacrylates);
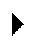 it must not adversely affect the rheological properties and the processibility or time of use of a render, or only to a minor extent;
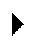 it should exhibit good water resistance (resistance to leaking), UV stability and weathering stability;
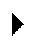 it should not lead to colour changes, neither in the coating composition nor in the final use;
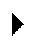 it should be low-odour;
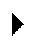 it should not emit toxicologically relevant substances, i.e. it should preferably be free from AOX compounds, formaldehyde-releasing compounds, isothiazolones and organic solvents;
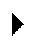 it should contain materials which have been studied thoroughly, and assessed, with regard to the toxicity to humans and the environment, i.e. it should not be necessary to label the preservative and the coating composition with the hazardous substances label "T" (toxic materials), a classification of WGK ≤ 2 [WGK = hazard-to-water classification] being preferred;
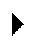 it should be non-foaming or low-foaming, and
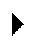 it should have a shelf life of at least 3 months, preferably at least 12 months, in the coating composition.

After application and drying, the coatings treated with the preservative must show no fungal or algae growth over a long period, for example over at least 5 years. An activity against bacteria and fungi is desired for the self-preservation of the coating composition. In addition, the preservative should be suitable for use in both internal and external dispersion renders and mineral renders and economical to use.

Finally, it should be possible for the coating composition to have a pH of at least 9, which is the case in silicate renders where cement is used.

This object is achieved in accordance with the invention by a preservative comprising one or more quaternary ammonium compounds. Thus, the invention is based inter alia on the finding that such a preservative in a coating composition shows a particularly good microbicidal, in particular fungicidal, action when the composition is applied to an alkaline, in particular a strongly alkaline, substrate and/or is alkaline, in particular strongly alkaline, itself.

Accordingly, the invention relates to a preservative and to a preserved coating composition.

### 1. Preservative

The preservative according to the invention comprises one or more quaternary ammonium compounds. A quaternary ammonium compound according to the invention can be, for example, a betaine or a zwitterionic compound. On the other hand, preferred quaternary ammonium compounds are those which are in partially or fully dissociated form (anion(s) and cation(s)) in aqueous solution (quaternary ammonium salts).

Preferred quaternary ammonium salts are those of formulae [R¹R²R³R⁴N]⁺[X]⁻ and [*N*-R⁵-pyridinium]⁺[X]⁻, where R¹ to R⁵ can be identical or different and are selected from among C₁- to C₃₀-alkyl, -alkenyl and -aryl groups and their mixtures, which can have one or more atoms selected from among O, S, N and P, it also being possible for one or more of R¹ to R⁴ to be H, with the proviso that at least one of the groups R¹ to R⁴ is other than H, X is an anion (of an inorganic or organic acid). In this context, both anion and cation of the quaternary ammonium salt can be polyvalent ions resulting in a stochiometry of [A⁽ⁿ⁺⁾]ₘ[K^{(m+)}]ₙ.

Quaternary ammonium cations which are preferably employed in accordance with the invention are [R¹N(CH₃)₃]⁺[X]⁻, [R¹NH₃]⁺[X]⁻, [R¹(aryl-CH₂)NH₂]⁺[X]⁻, [R¹(aryl-CH₂)N(CH₃)₂]⁺[X]⁻, [R¹R²N(CH₃)₂]⁺[X]⁻ and [*N*-R⁵-pyridinium]⁺[X]⁻, where R¹, R² and R⁵ are selected independently of one another from among C₁- to C₃₀-alkyl, C₆- to C₁₂-aryl and -(CH₂-CHR⁶O)ₙ-R⁷, in which n is a number of 1 to 20 and R⁶ and R⁷, which can be identical or different, are H and/or C₁- to C₄-alkyl, and aryl denotes an aryl group which is optionally substituted.

Examples of cations of the quaternary ammonium salts employed in accordance with the invention are those of the formula [R¹N(CH₃)₃]⁺, where R¹ is C₆- to C₂₀-alkyl, -hydroxyalkyl or -polyoxyalkyl group or an optionally substituted aromatic radical having 6 to 12 carbon atoms. Further preferred cations of the quaternary ammonium salts according to the invention are C₈- to C₁₈-alkylbenzylammonium, benzalkonium, didecyl- and dioctyldimethylammonium, didecylmethylpoly)oxyethyl)-ammonium, cetylpyridinium, cetyltrimethylammonium and benzyl-fatty-alkyl-bis(hydroxyethyl)ammonium and mixtures of these, the preservative especially preferably comprising mixtures of two, three and four of these preferred cations, such as mixtures of benzalkonium and dialkyldimethylammonium. In this context, the cation may also be present as a polymer, as is the case in, for example, polyhexamethylene biguanide (Vantocil IB).

Examples of anions and classes of anions of the quaternary ammonium salts employed in accordance with the invention are hydroxide, sulphate, hydrogen sulphate, metho sulphate, etho sulphate, lauryl sulphate, lauryl ether sulphate, cellulose sulphate, sulfamate, halides (fluoride, chloride, bromide, iodide), nitrite, nitrate, orthosilicates (for example sodium, potassium, magnesium and aluminium orthosilicate), disilicate, metasilicate, sheet-silicates such as hectorite, bentonite, montmorillonite, smectite, carbonate, hydrogen carbonate, phosphate, alkylphosphate, metaphosphate, polyphosphate, phosphonate, thiocyanate, zincate, aluminate, alumosilicates (such as, for example, zeolite), thiosulphuric esters (for example Bunte salts of DE-A-41 22 962 and DE-A-3 307 733), carboxylic acid salts such as benzoate, lactate, acetate, propionate, citrate, succinate, glutarate, adipate, toluenesulphonate (tosylate), salicylate, mercapto compounds such as 2-mercaptobenzothiazole, 2-mercaptopyridine N-oxide, dithiocarbamate, fatty acid anions such as stearate, laurate, 2-ethylhexanoate, saccharinate, sulphonates such as alkylbenzenesulphonate, alkylsulphonate, and phenolates such as phenylphenolate. In addition, known anionic surfactants may also be used as anions, and these can form neutral salts with the cations of the quaternary ammonium salts (quat-anion surfactant complexes). Especially preferred anions are orthosilicate and thiocyanate.

Examples of preferred quaternary ammonium salts are didecylmethylpoly(oxyethyl)ammonium propionate, didecyldimethylammonium chloride, benzalkonium chloride, cetylpyridinium chloride, cetyltrimethylammonium chloride, dioctyldimethylammonium chloride and alkylamine silicate.

The preservative according to the invention may, on the one hand, consist of just one or more quaternary ammonium compounds. On the other hand, it is preferred to incorporate (inorganic) compounds into a preservative, preferably one or more alkalizing agents such as the hydroxides, carbonates, hydrogen carbonates or silicates of alkali metals, the oxides, carbonates, hydrogen carbonates, hydroxides or silicates of alkaline earth metals, or Al(OH)₃, in particular NaOH, KOH, Ca(OH)₂, Mg(OH)₂, Al(OH)₃, basic carbonates such as Na₂CO₃, K₂CO₃, NaHCO₃, CaO, orthosilicates such as sodium orthosilicate, potassium orthosilicate, metasilicates such as sodium metasilicate, potassium metasilicate, the silicate-containing waterglasses (for example sodium waterglass, potassium waterglass, with potassium waterglass being preferred) and silica gel. If the preservative according to the invention contains one or more of these alkalizing agents, it preferably also contains a solvent. Suitable solvents are water, alcohols, glycols or glycol ethers, for example 1,2-propylene glycol, butyl diglycol, butyl glycol, 1-methoxypropan-2-ol, triethylene glycol, diethylene glycol and dipropylene glycol.

It has been found that preserved coating compositions which contain in accordance with the invention a quaternary ammonium compound have undergone particularly good algicidal and fungicidal treatment when they have a pH of at least 9. Accordingly, it is preferred to introduce an alkalizing agent into the composition, together with the preservative according to the invention.

Thus, a preferred preservative according to the invention has a pH of at least 9, preferably at least 10, in particular at least 11, for example 12 to 13, and contains one or more quaternary ammonium compounds and one or more alkalizing agents, preferably alkali metal hydroxide, in particular sodium hydroxide. As an alternative, such a strongly alkali preservative according to the invention contains metasilicate, preferably alkali metasilicate such as potassium waterglass. In this embodiment, it is not necessary that the desired alkalinity of the composition treated with preservative is introduced exclusively via the preservative, but it is possible. The pH of a preferred strongly alkaline coating material, however, should preferably not drop owing to the addition of preservative, which is why a preferred preservative has at least the alkalinity of the coating material to which it is added.

If a preservative according to the invention contains a solvent, the preferred solvent being water, then the preservative contains at least 10% by weight of solvent. However, the solvent content chosen is as low as possible in this case and amounts to, preferably, less than 90%, more preferably less than 80% by weight, in particular less than 70% by weight, for example 20 to 60% by weight or 30 to 50% by weight, based on the total mass of the preservative.

In addition, the preservative according to the invention can contain one or more other biocides selected from among formaldehyde and formaldehyde-releasing compounds, isothiazolinones such as N-octylisothiazolone, 4,5-dichloroisothiazolone, n-butylbenzisothiazolone, benzimidazole derivatives such as carbendazim, thiabendazole and their salts, triazole and imidazole derivatives such as tebuconazole and propiconazole, iodine compounds such as iodopropinyl butylcarbamate, diidomethyltolyl sulphone, pyridine derivatives such as zinc pyrithione and 2,3,5,6-tetrachloro-4-methylsulphonylpyridine, triazine derivatives such as terbutryn, prometryn and Irgarol 1051, urea derivatives such as diuron, isoproturon, dithiocarbamates such as ziram, thiram, hydroxylamine derivatives such as the potassium and aluminium salts of N-cyclohexyl-N-nitrosohydroxylamine, and 2-(thiocyanatomethylthio)benzothiazole (TCMTB), benzothiophene-2-cyclohexylcarboxamide S,S-dioxide and tetrachloroisophthalonitrile. Combinations of the abovementioned biocides are preferred in order to close gaps with regard to their action. In some cases, synergistically increased algicidal and fungicidal action of the preservative according to the invention is observed.

A large number of the quaternary ammonium compounds employed in accordance with the invention are commercially available. Others can be prepared readily, for example by known salt interchange methods and isolation methods. Thus, for example, quaternary ammonium silicates can be obtained by reacting quaternary ammonium hydroxides with silica gel, an isolation of the materials in many cases not being necessary; the reaction mixtures as such have a sufficient biocidal activity and can be used for the purposes according to the invention. For example, solutions of quaternary ammonium salts can be prepared by mixing commercially available solutions of quaternary ammonium salts (for example benzalkonium chloride, 50% by weight in water; if appropriate as a mixture with didecyldimethylammonium chloride, 40% by weight in water) with alkali metal waterglass solutions (for example potassium waterglass, < 40% by weight in water, for example approximately 30% by weight in water). Especially suitable are such clear solutions of equimolar mixtures of the reactants.

While a preservative according to the invention is preferably present as a clear fluid, it is also possible to formulate it as a dispersion, emulsion, paste, as granules or as a powder, in which case it contains, for example, suitable solid inert carriers such as talc, argillaceous earth or diatomaceous earth. In addition, a preservative according to the invention may contain additives such as markers and indicators, which permit determination of the concentration of active ingredients in the product to which algicides and fungicides have been added.

### 2. Compositions according to the invention

The preservative according to the invention is employed for the preparation of a coating composition which preferably comprises a synthetic resin or polymer dispersion which preferably comprises potassium waterglass. Examples of suitable dispersions are described, for example, in DE-A-37 11 680 and EP-A-0 328 335 and in Karsten, Lackrohstoff-Tabellen, Kurt Vinzenz Verlag 2000, in particular on pages 364 (poly(meth)acrylate homo- or copolymer dispersions) and 451 (silicone-based dispersions).

Preferred paints or renders comprising polymer or synthetic resin dispersions are:
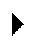 those on an acrylate or straight acrylate base with a polymer fraction of not more than 50% by weight, preferably not more than 30% by weight and especially preferably not more than 15% by weight,
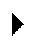 those on an acrylic/styrene copolymer base with a polymer fraction of not more than 50% by weight, preferably not more than 30% by weight and especially preferably not more than 15% by weight,
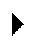 those on a silicone resin base with a polymer fraction of not more than 50% by weight, preferably not more than 30% by weight and especially preferably not more than 15% by weight,
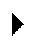 those on a silicate (for example cement) base based on potassium waterglass, optionally with small amounts (preferably not more than 10% by weight, especially preferably 5% by weight) of straight acrylate dispersion or acrylic/styrene copolymer dispersion.

While the preservative according to the invention is preferably employed in the preparation of a coating composition containing synthetic resin dispersion or polymer dispersion, the presence of such a dispersion is not imperative, which is why, in an alternative embodiment, the coating composition containing the preservative according to the invention is free from synthetic dispersion or polymer dispersion.

In a preferred embodiment, the composition to which a microbicidal (in particular fungicidal) preservative has been added (preserved coating composition) has a pH of not less than 9, more preferably 10.0 to 13.5, in particular 10.5 to 13, for example 11 to 12.5 and 11.2 to 11.8.

A composition according to the invention is preferably formulated in such a way that it comprises from 0.1 to 10% by weight, more preferably 0.3 to 3% by weight, and in particular 1 to 2% by weight of preservative. The concentration, of the preservative according to the invention, which is chosen in each individual case will, of course, depend on the amount of quaternary ammonium compound present in the preservative. The amount of quaternary ammonium compound (indicated as quaternary ammonium chloride if the quaternary ammonium compound is a quaternary ammonium salt) in a composition with added fungicide and algicide is preferably in the range of from 0.05 to 3% by weight, more preferably 0.1 to 1% by weight, in particular 0.15 to 1% by weight, such as 0.2 to 0.8% by weight, based on the total mass of the composition.

The coating composition into which the preservative according to the invention is incorporated in order to provide a coating composition with added microbiocide is, preferably, a synthetic resin dispersion (with a comparably large content of dispersed synthetic resin) or a mixture comprising a synthetic resin dispersion (with the comparatively low content of dispersed synthetic resin), the term "synthetic resin dispersion" and "synthetic resin dispersion-containing mixture" merging into each other.

In a preferred embodiment of the invention, a composition which has preservative added to it in accordance with the invention is in the form of an interior or exterior paint or varnish. In this case, such a composition comprises, in addition to the synthetic resin dispersion (as organic binder) and the preservative according to the invention, one or more other organic binders, pigments, fillers and additives, the term "additives" including thickeners, wetting and dispersing agents, antifoams, adhesion promoters, surface modifiers such as slip additives or dulling agents, levelling agents and film-forming media, dryers, antiskinning agents, light stabilizers, corrosion inhibitors, flame retardants and in-can preservatives. Examples of compositions to which preservative has been added in accordance with the invention and which are in the form of a varnish are (classified in accordance with the type of binder used) straight acrylic dispersion varnish, styrene/acrylic dispersion varnish, alkyd resin dispersion varnish and polyurethane dispersion varnish. Corresponding examples of compositions with preservative added in accordance with the invention and which are in the form of a paint are (classified in accordance with the type of binder used) straight acrylic emulsion paints, styrene/acrylic emulsion paints, silicone resin emulsion paints, silicone-resin-modified straight acrylic emulsion paints, silicate paints and synthetic resin-modified silicate paints.

In a further embodiment, a preservative according to the invention is incorporated into a material in which an alkaline pH has already been established, for example a finished render, in particular silicate render. A composition with preservative added in accordance with the invention may, however, also be in the form of a compound which is used when preparing a render (render base).

The term "render" as used in the present context encompasses not only moist renders, i.e. coating materials in the fluid processing condition such as synthetic resin renders, but also dry renders, i.e. pulverulent dry preparations which are mixed with water and so converted into a processable fluid condition, such as lime cast, white coat or cement facing. Examples of components of compositons with preservative added in accordance with the invention which are in the form of a render are lime, cement, gypsum, anhydrite, organic polymers or copolymers as binders, aggregates such as sands, and additives which modify the properties of the renders, such as air entrainers, liquifiers, accelerators, retarders, integral waterproofing agents, antifreeze agents and plastifying synthetic polymer additions (see also Brasholz, Handbuch der Anstrich-Beschichtungstechnik [Paint and coating technology handbook], Bauverlag GmbH, 2^{nd} Edition 1989; Römpp Lexikon Lacke und Druckfarben [Dictionary of varnishes and printing inks], Georg Thieme Verlag 1998, keyword "Putze" [renders]). Examples of compositions with preservative added in accordance with the invention and which are in the form of a render are (classified in accordance with the type of binder used) inorganically-bound renders such as silicate render, lime cast, white coat, cement facing and synthetic resin-treated types of these classes, and organically bound renders or synthetic resin renders such as straight-acrylate dispersion render, styrene/acrylate dispersion render, acrylate copolymer dispersion render, silicone resin dispersion render, silicone-resin-modified straight-acrylate dispersion render, polyvinyl acetate dispersion render, polyvinyl acetate copolymer dispersion render and polyvinyl propionate/acrylate copolymer dispersion render.

In particular, the invention relates to a silicate render preserved in accordance with the invention with quaternary ammonium compound, which silicone render comprises at least 2% by weight, preferably 5 to 10% by weight, of synthetic resin dispersion and has a pH of from 10 to 12.5, preferably from 11.2 to 12, in particular from 11.2 to 11.8.

A process for the preparation of a composition with an added fungicide and algicide is characterized in that it encompasses mixing of a preservative which comprises one or more quaternary ammonium compounds and which additionally may also comprise the abovementioned other constituents of a preservative according to the invention with a synthetic resin dispersion with a pH of at least 9 and/or a synthetic-resin-dispersion-containing mixture (preferably a render base) with a pH of at least 9.

A corresponding process is characterized in that it encompasses mixing a preservative in which an alkaline pH has been established, which comprises one or more quaternary ammonium compounds and which additionally may also comprise the abovementioned other constituents of a preservative according to the invention and which has a pH of at least 9, preferably at least 10, more preferably at least 11, for example 12 to 13, with a synthetic resin dispersion and/or a synthetic-resin-dispersion-containing mixture, preferably a strongly alkaline silicate render.

The preservative according to the invention can be incorporated without difficulty into conventional materials used for coatings in order to give compositions according to the invention. It has proved advantageous to incorporate the preservative into the material to which it is to be added with stirring and heating, for example at 50°C. This procedure improves the stability of the resulting composition. The preservative is added to the material with stirring and as slowly and uniformly as possible, and the preservative is distributed in the material uniformly and finely to ensure optimal efficacy.

Incorporation into the material of the preservative according to the invention as the last component is not imperative; after addition of the preservative according to the invention, further components may be added; in this case, the composition according to the invention is an intermediate in the preparation of a coating composition.

When incorporating a preservative according to the invention into a render, a moderately increased viscosity may result. The original viscosity can be restored by adding small amounts of water, for example, 2 parts by weight of water per 100 parts by weight of composition with a fungicide and algicide added in accordance with the invention.

The compositions with algicides and fungicide added in accordance with the invention are applied with the aid of customary coating methods. The coat thickness can vary and, in the case of the render, depend on the particle size of the aggregates such as sand; based on a moist render, it can be, for example, 0.4 kg/m². Nothing unusual needs to be taken into account when applying renders with additions according to the invention.

For the description of the invention, a substrate with a pH of from 7 to 9 is considered weakly alkaline, a pH of from 9 to 11 strongly alkaline and a pH of greater than 11 very strongly alkaline.

The preservatives and compositions according to the invention meet the abovementioned requirements. Thus, the preservatives are inexpensive and in some cases commercially available or can simply be prepared from commercially available substrates following simple procedures and can be introduced onto the market without difficulties owing to the use of materials which have already been analysed and assessed with regard to their toxicity to humans and ecotoxicity.

Surprisingly, the resistance to leaching of the quaternary ammonium compounds, which are otherwise readily to moderately soluble in water, in coatings which are in contact with (strongly or very strongly) alkaline substrates or which are (strongly) alkaline themselves, is good to very good. Starting from the unsatisfactory results of the resistance to leaching of quaternary ammonium salts, it could not have been expected that the resistance to leaching of the quaternary ammonium compounds increases in alkaline to strongly alkaline compositions and/or in contact with an alkaline, preferably strongly alkaline and in particular very strongly alkaline substrate. In particular, it was surprising that the preserving action in compositions such as renders with high pH values and/or upon contact with a strongly or very strongly alkaline substrate is good to very good.

In addition, a good to sufficient compatibility (long-term stability) of the quaternary ammonium compounds with the other components of the composition and/or in contact with the alkaline substrate has been found, which is surprising.

The examples which follow illustrate the advantages of the invention.

### Examples

| Abbreviations used: | |
|---|---|
| Benzalkonium chloride solution | C₁₂-C₁₄-alkylbenzyldimethylammonium chloride, 50% by weight in water |
| Bardac LF | Dioctyldimethylammonium chloride, 50% by weight in water |
| Bardac 2240 | Didecyldimethylammonium chloride, 40% by weight in water |
| Bardac 22 | Didecyldimethylammonium chloride, 50% by weight in water/isopropanol |
| Potassium waterglass 28/30 | Aqueous potassium silicate solution, < 40% by weight (usually approximately 30% by weight) potassium silicate, MV > 3.2 |
| Water | Fully demineralized water |
| Kathon 893 | N-octylisothiazolone, 46.1% by weight in 1,2-propylene glycol |
| Sodium waterglass | Aqueous sodium silicate solution, < 40% by weight (usually approximately 30% by weight) sodium silicate, MV > 3.2 |

In the examples which follow, parts are *parts by weight* and percentages *percentages by weight* unless otherwise specified.

### Test methods:

### Test method 1

### Determination of the resistance to fungal attack

### Field of application

Laboratory method for determining the resistance of masonry coatings to fungal attack. In this method, masonry coatings on standardized paper are used as the test substrate and Aspergillus niger (AN, ATCC 6275), Penicillium funiculosum (PF, ATCC 36839) and Alternaria alternata (AL) are used as test fungi.

The experiments are carried out in Petri dishes on dextrose media.

### Sample preparation

1000 g of the material to which fungicide is to be added are treated with different concentrations of the fungicide to be tested (in separate batches) and homogenized using a suitable stirrer.

### Preparation of the test objects

Paper (Schleicher & Schüll No. 2589 B/X 24078) materials 90 x 270 mm in size are coated with the test material. The paint or render samples are coated at a moist-coat thickness of 250 µm, using a doctor blade. The doctor blade must be provided with an aperture of at least 6.5 cm width. In the case of renders, the coat thickness depends on the particle size, as is the case under practice conditions. The coated support materials, termed test specimens hereinbelow, are subsequently dried horizontally for 5 days.

### Pretreatment of the test specimens

The pretreatment of the test specimens is intended to simulate the removal of microbiocides owing to atmospheric exposure, which is possible under realistic conditions. To this end, the test specimens are leached for 72 hours (in the case of renders: 336 hours) in running tap water at a temperature of 15 ± 5°C at a flow rate of 1 1/min and subsequently dried for 2 days. The cross section of the container for the leaching treatment should amount to 1000 ± 500 cm² in the direction of flow. Then, samples with a diameter of 5 cm are punched from the pretreated test specimens and sterilized in a Co⁶⁰ source at at least 10 kGy.

### Experimental procedure

### Inoculation and incubation

The Sabouraud dextrose agar which has solidified in the Petri dish is inoculated with 0.2 ml of spore suspension (10⁷ spores/ml) and plated out using a sterile Drigalski spatula or a bent sterile glass rod.

Using tweezers, the pretreated samples are then placed uniformly on the inoculated surface of the medium. Care must be taken that the sample comes into full contact with the surface of the medium. This is followed by three weeks' incubation at 30 ± 2°C.

### Scoring

After one, two and three weeks, the test specimens are examined for fungal growth. Evaluation was done visually or using a magnifying glass, if so required for discounting contaminations. If contamination in an extent which considerably interferes with the evaluation is observed, the experiment cannot be assessed and must be repeated. The samples are assessed using the following key:
- 00 =: all of the plate free from fungal growth*
- 0 =: inhibition zone (zone around the sample which is free from growth)*
- (0) =: fungal growth up to the sample*
- 1 =: only the edge of the sample is covered in fungal growth*
- 2 =: the edge of the sample is covered in fungal growth (less than 25%)
- 3 =: individual colonies growing on the sample surface (25 to 75%)
- 4 =: extensive growth on the sample surface (75% and more, but not all of the area)
- 5 =: the sample surface is completely covered in fungal growth (100%)

* Samples with the scores 00, 0 (0) and 1 can be termed "with effective addition against fungal growth".

### Test method 2

### Determination of the resistance against attack by algae

### Field of application

Laboratory method for determining the resistance of masonry coatings to attack by algae. In this method, masonry coatings on standardized paper are used as the test substrate and Scenedesmus cavuolatus (CS, Chlorella fusca) as test alga.

The experiments are carried out in Petri dishes on alga.

### Sample preparation

1000 g of the material to which microbicide is to be added are treated with different concentrations of the microbiocide to be tested (in separate batches) and homogenized using a suitable stirrer.

### Preparation of the test objects

Paper (Schleicher & Schüll No. 2589 B/X 24078) materials 90 x 270 mm in size are coated with the test material. The paint or render samples are coated at a moist-coat thickness of 250 µm, using a doctor blade. The doctor blade must be provided with an aperture of at least 6.5 cm width. In the case of renders, the coat thickness depends on the particle size, as is the case under practice conditions. The coated support materials, termed test specimens hereinbelow, are subsequently dried horizontally for 5 days.

### Pretreatment of the test specimens

The pretreatment of the test specimens is intended to simulate the removal of microbicides owing to atmospheric exposure, which is possible under realistic conditions. To this end, the test specimens are leached for 72 hours (in the case of renders: 336 hours) in running tap water at a temperature of 15 ± 5°C at a flow rate of 1 1/min and subsequently dried for 2 days. The cross section of the container for the leaching treatment should amount to 1000 ± 500 cm² in the direction of flow. Then, samples with a diameter of 5 cm are punched from the pretreated test specimens and sterilized in a Co⁶⁰ source at at least 10 kGy.

### Experimental procedure

### Inoculation and incubation

The samples are placed on the algal media following aseptic procedures and are inoculated in the middle with 0.5 ml of each algal suspension.

The mixture of the algal suspension is distributed on the surface using a Drigalski spatula or a bent sterile glass rod.

During the growth phase of 22 ± 2°C, the coated samples in the Petri dishes are exposed to light at an intensity of approx. 1000 Lux (conventional fluorescent tubes, type D 67 daylight). A cycle of 12 hours exposure to light and 12 hours storage in the dark is used.

### Scoring

The algal growth on the samples is studied and scored after 2 weeks. Scoring is done visually and based on the following key:

### Group 1 (IZ)

No algal growth on the test specimens.

Formation of an inhibitory zone (IZ = diameter of the inhibitory zone in mm) or algal growth on the medium up to the edge of the test specimens.

Paints of these groups can be termed "with effective addition against algal growth".

### Group 2 (AG)

Visible algal growth on the test specimen.
- = no growth
+ = some growth
++ = moderate growth
+++ = pronounced growth

### Results of the use tests

The following materials (paints or renders) were employed.

| | |
|---|---|
| Material W | Stolit K 2, synthetic-resin-bound render, pH 9.3, styrene/acrylate dispersion already preserved with a mixture of 5-chloro-2-methyl-2H-isothiazol-3-one and 2-methyl-2H-isothiazol-3-one (weight ratio 3:1) |
| Paint X | straight-acrylic masonry paint, pH 8.8 |
| Render Y | Stosil APK2, pH 11.3, synthetic-resin-bound render, styrene/acrylate dispersion as organic binder, contains potassium waterglass |
| Render Y2 | Stosil APK 2 (see above), render samples with preservative addition were stored for 4 months at 25°C |
| Paint Z | Sto levelling paint, pH 11.5, polymer dispersion as organic binder, contains potassium waterglass |
| Sto-Levell | Cement-bound reinforcing flat coat for insulating board, pH approx. 13 |

The pH values of dry substrate are determined by moistening the substrate and determining the pH of the moistened substrate with conventional means such as pH indicator strips. All other pH measurements are carried out using commercially available pH-meters:
- The pH of a mixture comprising water (for example a preservative comprising water or wet render) is measured directly using a pH-meter.
- If the preservative is present as an anhydrous solution, an aqueous mixture of 1 part by weight of preservative and 1 part by weight of water is prepared. The pH of this aqueous mixture is considered the pH of the preservative.
- The pH value of a solvent-free mixture (such as a solvent-free preservative or a composition in the form of a dry render) is indicated as the pH value of an aqueous dispersion (1% by weight of solvent-free mixture in water).

Artificial weathering was carried out using a QUV weathering apparatus from "The Q-Panel Company", Cleveland, Ohio, U.S.A. over the period indicated using cycles of 4 hours UV/+50°C and 4 hours condensation/+50°C.

### Example 1

### 1. Preparation of quaternary ammonium silicate

1A Preparation of a benzalkonium silicate solution
   20 g of potassium waterglass 28/30 is added dropwise with stirring to 40 g of benzalkonium chloride solution; a slightly viscous clear solution results.
1B Reaction of benzalkonium chloride with potassium waterglass
   4.96% by weight of benzalkonium chloride solution, 5.75% by weight of potassium waterglass 28/30 and 89.29% by weight of water were stirred together; a colourless precipitate resulted. The water was separated off by decanting, the residue was digested with water, the water was again removed, and the residue was dried in the desiccator. This gave a colourless odourless powder. (Note: 0.5 g of this powder in 50 g of water do not give a clear solution, not even when the mixture is stirred for several hours).
1C Preparation of benzalkonium chloride, Bardac 2240 and potassium waterglass
   40 g of benzalkonium chloride solution, 30 g of Bardac 2240 and 30 g of potassium waterglass 28/30 were mixed thoroughly; this gave a clear solution.

### 2. Preparation of quaternary ammonium thiocyanate

2A Preparation of a benzalkonium thiocyanate solution
   40.5 g (0.5 mol) of sodium thiocyanate were dissolved in 59.5 g of water and the solution was added to a mixture of 360 g of benzalkonium chloride solution (0.5 mol benzalkonium chloride) in 127.5 g of butyl diglycol. Following vigorous shaking, two phases form which are left to stand overnight and then separated in a separating funnel.
   Organic top phase (benzalkonium thiocyanate in butyl diglycol): 371 g of clear, virtually colourless solution, density (20°C) 0.9810 g/ml, refractive index 1.4681, pH value 1% by weight in water 6.3, benzalkonium thiocyanate content 51.7% by weight;
   aqueous bottom phase (sodium chloride and water): 209 g.
2B Preparation of benzalkonium thiocyanate as crude material:
   162g (2 mol) sodium thiocyanate were dissolved in 240 ml of water, and the solution was added to 1440 g (2 mol) of benzalkonium chloride solution, with stirring. After the mixture had been stirred for 10 minutes, 100 ml of ethyl acetate were added. The phases were separated in a separating funnel and the organic phase was washed once with 100 ml of water and subsequently concentrated in a rotary evaporator. This gives 788.3 g of yellow oil as crude product.
2C Preparation of a 30% (by weight) solution of benzalkonium thiocyanate in 1,2-propylene glycol
   30 g of benzalkonium thiocyanate (2B) and 70 g of 1,2-propylene glycol were stirred at room temperature until homogeneous, which gave a clear, pale yellowish-green solution.
2D Combination of benzalkonium thiocyanate solution with Kathon 893
   86.8 g of the solution of Example 2A and 13.2 g of Kathon 893 were combined with stirring, which gave a pale yellowish-brown solution.
   Characteristics: butyl diglycol odour, density (20°C) 0.9887 g/ml, refractive index 1.4692, pH value 1% by weight in water 5.4.
2E Combination of a benzalkonium thiocyanate solution with Kathon 893 and terbutryn
   83.8 g of the product of Example 2A, 30.2 g of Kathon 893 and 3 g of terbutryn were combined with stirring, which gave a clear, pale yellowish solution.
   Characteristics: butyl diglycol odour, density (20°C) 0.9921 g/ml, refractive index 1.4720, pH value 1% by weight in water 5.6.
2F Preparation of Bardac 22 thiocyanate
   40.5 g (0.5 mol) of sodium thiocyanate were dissolved in 150 ml of water. This solution was added to 361 g (0.5 mol) of Bardac 22, with stirring.
2G Work-up of the product of 2F to give a crude product
   The reaction mixture of Example 2F was stirred for 15 minutes and then extracted with 400 ml of dichloromethane. The organic phase was dried over sodium sulphate and concentrated. This gave 199.4 g of a yellow oil as crude product.
2H preparation of a 30% (% by weight) solution of Bardac 22 thiocyanate and 1,2-propylene glycol
   30 g of Bardoc 22-thiocyanate (solid from Example 2G) and 70 g of 1,2 propylene glycol were stirred at room temperature until homogeneous, which gave a clear yellow solution.

### 3. Preparation of a benzalkonium chloride/potassium waterglass combination

Benzalkonium chloride and potassium waterglass 28/30 were mixed in a weight ratio of 70:30 (A), 60:40 (B) and 80:20 (C ) and the mixtures were stirred for 15 minutes. Each gave clear, pale yellowish solutions. Mixing with benzalkonium chloride solution with potassium waterglass in a weight ratio of 1:1 (D) gives a clear colourless solution.

### 4. Preparation of a benzalkonium chloride/sodium waterglass combination

90 g of benzalkonium chloride solution and 10 g of sodium waterglass solution 37/40 were mixed, and a clear, colourless solution was obtained.

### 5. Preparation of a combination of two quaternary ammonium compounds with potassium waterglass

Benzalkonium chloride solution, Bardac 2240 and potassium waterglass were stirred in a weight ratio of 25:25:50 (A) and 30:30:40 (B) . After 24 hours at room temperature, the mixtures are homogeneous and slightly opaque.

### 6. Preparation of combinations of quaternary ammonium compounds

The following parts by weight were mixed:

| | A | B | C |
|---|---|---|---|
| Benzalkonium chloride solution | 20 | 20 | 13.4 |
| Bardac 2240 | | 25 | 16.7 |
| Bardac LF | 20 | | 13.4 |
| Water | 60 | 55 | 56.5 |

Clear, colourless solutions are obtained.

### 7. Efficacy of the preservatives according to the invention in the fungi + algae test

In Examples 7.1 to 7.8, the percentages indicate percent by weight of preservative in the material with added fungicide and algicide.

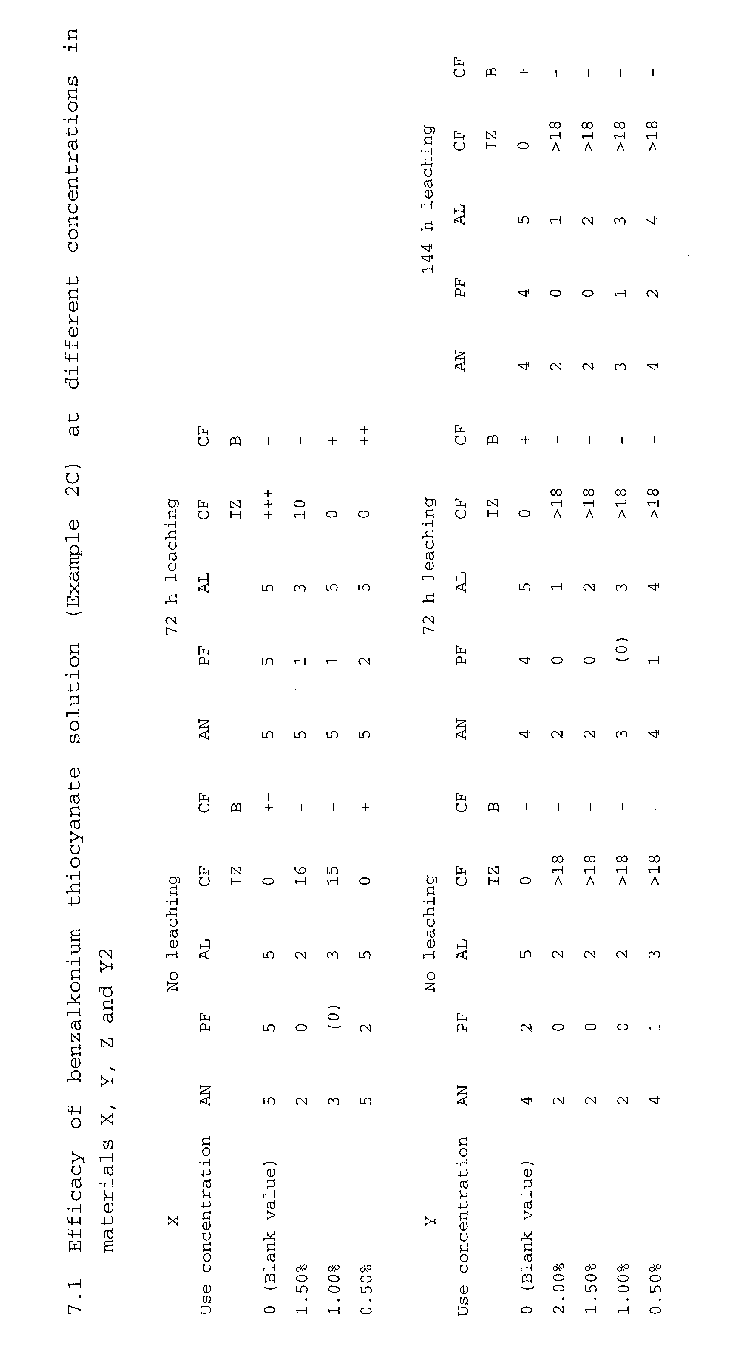

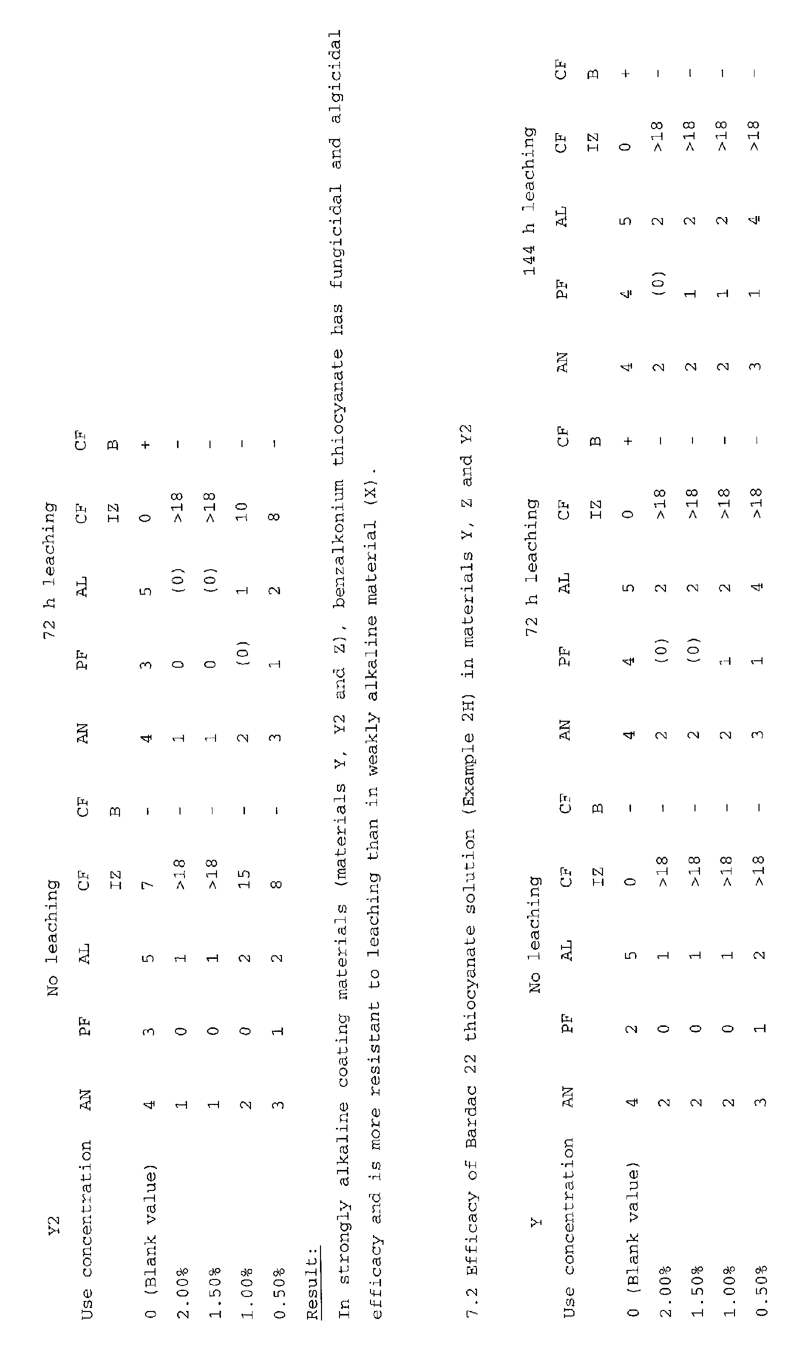

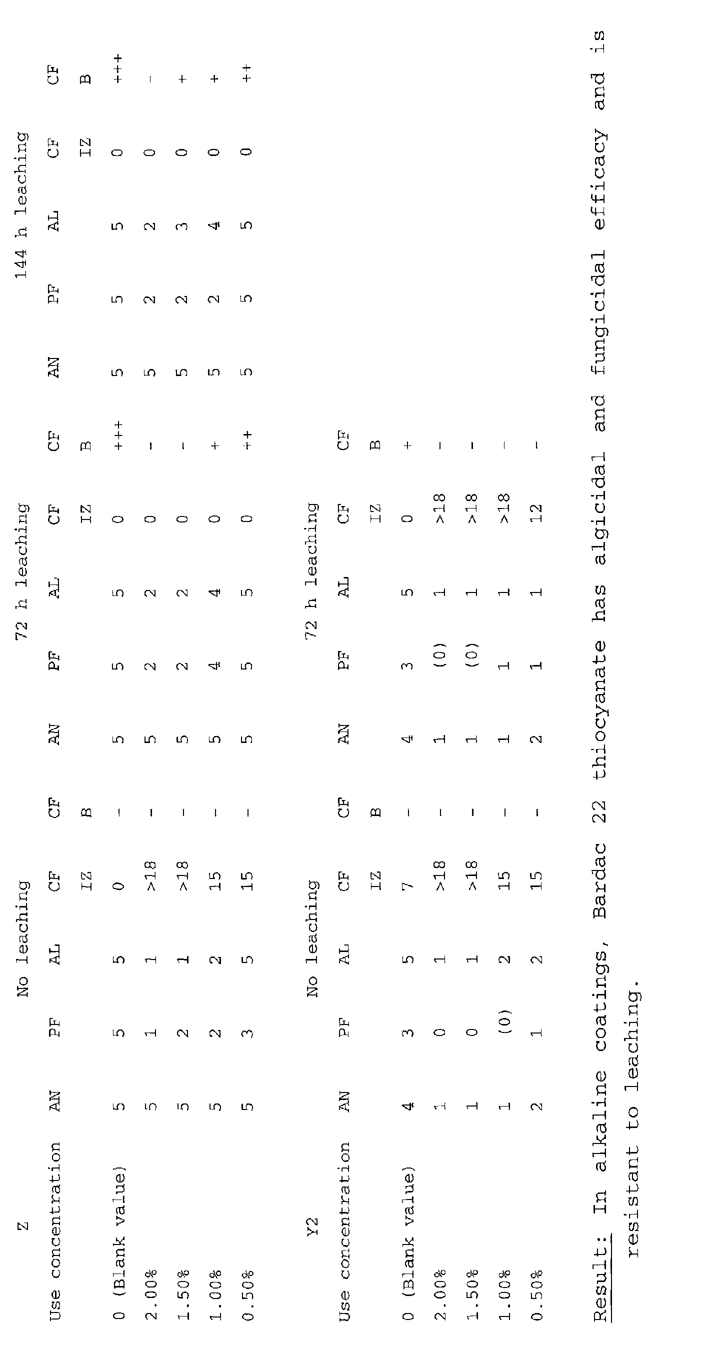

7.3 Efficacy of benzalkonium silicate solution (Example 1A), benzalkonium thiocyanate solution (Example 2A), benzalkonium thiocyanate solution with Kathon 893 (Example 2D) and benzalkonium thiocyanate solution with Kathon 893 and terbutryn (Example 2E) in material W (on Eternit slabs).

The render is applied to a nominal thickness (particle size of the largest particle, here 2 mm) using a metal stopping knife.

| W | | 14 days leaching | | | | |
|---|---|---|---|---|---|---|
| Use concentration | | AN | PF | AL | CF IZ | CF B |
| 0(blank value) | | 1 | 2 | 2 | 4 | - |
| 0.8% | 2D | 1 | 0 | 1 | 0 | - |
| 0.8% | 2E | 1 | 0 | 1 | 10 | - |
| 0.8% | 2A | 1 | 0 | 1 | 0 | - |
| 1.2% | 2A | 1 | 1 | 1 | 0 | - |
| 0.8% | 1A | 1 | 1 | 1 | 0 | - |

### Result:

The preservatives according to the invention have good algicidal and fungicidal efficacy.

7.4 Efficacy of benzalkonium thiocyanate solution (Example 2A), benzalkonium thiocyanate solution with Kathon 893 (Example 2D) and benzalkonium thiocyanate solution with Kathon 893 and terbutryn (Example 2E)

Sto-Levell was applied to Eternit slabs using a stopping knife. The final coating was material W with algicide and fungicide added according to the invention.

| W | | 14 days leaching | | | | |
|---|---|---|---|---|---|---|
| Use concentration | | AN | PF | AL | CF IZ | CF B |
| 0(blank value) | | 2 | 2 | 2 | 4 | - |
| 0.8% | 2D | 1 | 0 | 1 | 10 | - |
| 0.8% | 2E | 1 | 0 | 1 | 16 | - |
| 0.8% | 2A | 1 | 1 | (0) | 0 | - |
| 1.2% | 2A | (0) | (0) | (0) | >18 | - |

### Result:

The preservatives according to the invention have good algicidal and fungicidal efficacy.

7.5 Efficacy of benzalkonium silicate solution (Example 1A), benzalkonium thiocyanate solution (Example 2A), benzalkonium thiocyanate solution with Kathon 893 (Example 2D) and benzalkonium thiocyanate solution with Kathon 893 and terbutryn (Example 2E) in material W on Eternit slabs.

| W | | 1000 h QUV weathering | | | | |
|---|---|---|---|---|---|---|
| Use concentration | | AN | PF | AL | CF IZ | CF B |
| 0(blank value) | | 2 | 1 | 3 | >18 | + |
| 0.8% | 2D | 1 | 0 | (0) | >18 | - |
| 0.8% | 2E | 1 | 0 | 1 | >18 | - |
| 0.8% | 2A | 1 | 0 | (0) | >18 | - |
| 1.2% | 2A | 1 | 1 | (0) | >18 | - |
| 0.8% | 1A | 1 | 1 | 2 | 0 | - |

### Result:

The preservatives according to the invention have good algicidal and fungicidal efficacy.

7.6 Efficacy of benzalkonium thiocyanate solution (Example 2A), benzalkonium thiocyanate solution with Kathon 893 (Example 2D) and benzalkonium thiocyanate solution with Kathon 893 and terbutryn (Example 2E) in making W.

Sto-Levell was applied to Eternit slabs using a stopping knife. The final coating was material W with fungicide and algicide added according to the invention.

| W | | 1000 h QUV-weathering | | | | |
|---|---|---|---|---|---|---|
| Use concentration | | AN | PF | AL | CF IZ | CF B |
| 0(blank value) | | 1 | 1 | 1 | 10 | - |
| 0.8% | 2D | (0) | 0 | (0) | >18 | - |
| 0.8% | 2E | (0) | 0 | (0) | >18 | - |
| 0.8% | 2A | (0) | 0 | (0) | >18 | - |
| 1.2% | 2A | (0) | (0) | (0) | >18 | - |

### Result:

The preservatives according to the invention have good algicidal and fungicidal efficacy.

7.7 Efficacy of benzalkonium silicate solution (Example 1A), benzalkonium thiocyanate solution (Example 2A), benzalkonium thiocyanate solution with Kathon 893 (Example 2D) and benzalkonium thiocyanate solution with Kathon 893 and terbutryn (Example 2A) in material W on Eternit slabs.

Leaching was carried out as usual, but over an extended period. To this end, fungi growing under realistic conditions were isolated from submitted test specimens (field isolates) and grown. The field isolates obtained were employed instead of the standard test isolates.

| W | | 14 days leaching field isolates |
|---|---|---|
| Use concentration | | |
| 0(blank value) | | 1 |
| 0.8% | 2D | 0 |
| 0.8% | 2E | 0 |
| 0.8% | 2A | (0) |
| 1.2% | 2A | (0) |
| 0.8% | 1A | 2 |

### Result:

The preservatives according to the invention have a good fungicidal efficacy.

7.8 Efficacy of benzalkonium silicate solution (Example 1A), benzalkonium thiocyanate solution (Example 2A), benzalkonium thiocyanate solution with Kathon 893 (Example 2D) and benzalkonium thiocyanate solution with Kathon 893 and terbutryn (Example 2E) in material W on Eternit slabs.

| W | | 1000 h QUV weathering field isolates |
|---|---|---|
| Use concentration | | |
| 0(blank value) | | (0) |
| 0.8% | 2D | 0 |
| 0.8% | 2E | 0 |
| 0.8% | 2A | 0 |
| 1.2% | 2A | 0 |
| 0.8% | 1A | 0 |

### Result:

The preservatives according to the invention have a good fungicidal efficacy.

## Claims

1. Preservative for coating compositions, which preservative comprises
one or more quaternary ammonium compounds and
one or more alkalizing agents selected from amongst
alkali metal hydroxide, alkali metal carbonate, alkali metal hydrogen carbonate, alkali metal silicate, alkaline earth metal oxide, alkaline earth metal hydroxide, alkaline earth metal hydrogen carbonate, alkaline earth metal silicate and Al(OH)₃.

2. Preservative according to Claim 1, **characterized in that** it has, or exhibits upon application, a pH of at least 9, preferably at least 10, in particular at least 11.

3. Preservative according to Claim 1 or Claim 2, **characterized in that** the alkalizing agent is selected from amongst NaOH, KOH, Ca(OH)₂ Mg(OH)₂, A1(OH)₃, Na₂CO₃, K₂CO₃, NaHCO₃, CaO, sodium orthosilicate, potassium orthosilicate, sodium metasilicate and potassium metasilicate.

4. Preservative according to one of the preceding claims, **characterized in that** it additionally comprises one or more solvents.

5. Preservative according to Claim 4, **characterized in that** the solvent is selected from amongst water, alcohols, glycols, glycol monoethers, glycol diethers, polyglycols, polyglycol monoethers and polyglycol diethers, preferably water, 1,2-propylene glycol, butyl diglycol, butyl glycol, 1-methoxypropan-2-ol, triethylene glycol, diethylene glycol and dipropylene glycol.

6. Preservative according to one of the preceding claims, **characterized in that** it additionally comprises one or more inert carriers selected from amongst talc, argillaceous earth or diatomaceous earth.

7. Preservative according to one of the preceding claims, **characterized in that** the quaternary ammonium compound is a quaternary ammonium salt of the formula [R¹R²R³R⁴N]⁺[X]⁻ or of the formula [N-R⁵-pyridinium]⁺[X]⁻, where R¹ to R⁵ can be identical or different and are selected from among C₁- to C₃₀-alkyl, -alkenyl and -aryl groups and their mixtures, which can have one or more atoms selected from among O, S, N and P, it also being possible for one or more of R¹ to R⁴ to be H, with the proviso that at least one of the groups R¹ to R⁴ is other than H, and X is an anion.

8. Preservative according to Claim 7, **characterized in that** the quaternary ammonium salt is selected from amongst [R¹N(CH₃)₃]⁺[X]⁻, [R¹NH₃]⁺[X]⁻, [R¹(aryl-CH₂)NH₂]⁺[X]⁻, [R¹(aryl-CH₂)N(CH₃)₂]⁺[X]⁻, [R¹R²N(CH₃)₂]⁺[X]⁻ and [*N*-R⁵-pyridinium]⁺[X]⁻, where R¹, R² and R⁵ are selected independently of one another from among C₁- to C₃₀-alkyl, C₆- to C₁₂-aryl and -(CH₂-CHR⁶O)ₙ-R⁷, in which n is a number of 1 to 20 and R⁶ and R⁷, which can be identical or different, are H and/or C₁- to C₄-alkyl, and aryl denotes an aryl group which is optionally substituted, and X is an anion.

9. Preservative according to Claim 7 or 8, **characterized in that** X is selected from amongst halide, hydroxide, sulphate, hydrogen sulphate, methosulphate, ethosulphate, lauryl sulphate, lauryl ether sulphate, cellulose sulphate, sulphamate, nitrite, nitrate, silicate, carbonate, hydrogen carbonate, phosphate, phosphonate, thiocyanate, zincate, aluminate, alumosilicate, thiosulphate, carboxylate, mercaptide, dithiocarbamate, saccharinate, sulphonate and phenolate.

10. Preservative according to Claim 9, **characterized in that** X is selected from amongst orthosilicate, disilicate, metasilicate, sheet silicate and thiocyanate.

11. Preservative according to one of the preceding claims, **characterized in that** it additionally comprises one or more biocides selected from amongst formaldehyde and formaldehyde-releasing compounds, isothiazolones, benzimidazole derivatives, triazole or imidazole derivatives, iodopropinyl butylcarbamate, pyridine derivatives, triazine derivatives, urea derivatives, dithiocarbamates, hydroxylamine derivatives, 2-(thiocyanatomethylthio)benzothiazole, benzothiophene-2-cyclohexylcarboxamide S,S-dioxide and tetrachloroisophthalonitrile.

12. Preservative according to one of the preceding claims, **characterized in that** it comprises a benzalkonium salt and potassium waterglass and, if appropriate, also a dialkyl dimethylammonium salt.

13. Preserved coating composition comprising a preservative according to one of the preceding claims.

14. Preserved coating composition according to Claim 13, **characterized in that** it has a pH of at least 9, preferably 10.0 to 13.5, more preferably 10.5 to 13 and in particular 11.2 to 11.8.

15. Preserved coating composition according to Claim 13 or Claim 14, **characterized in that** it additionally comprises a synthetic resin dispersion.

16. Preserved coating composition according to Claim 15, **characterized in that** it comprises at least 2% by weight, preferably 5 to 10% by weight, of synthetic resin dispersion.

17. Preserved coating composition according to one of Claims 13 to 15, **characterized in that** it comprises 0.05 to 3% by weight, more preferably 0.1 to 1% by weight and in particular 0.2 to 0.8% by weight of quaternary ammonium compound, based on the total composition, the content being given as quaternary ammonium chloride if the quaternary ammonium compound is quaternary ammonium salt.

18. Preserved coating composition according to one of Claims 13 to 17, **characterized in that** it is a silicate render, comprises 5 to 10% by weight of synthetic resin dispersion and has a pH of 11.2 to 11.8.

19. Use of a preservative comprising one or more quaternary ammonium compounds for imparting fungicidal and algicidal properties to a coating composition in an alkaline environment, in particular for protecting the coating composition from Alternaria species, more preferably in a coating composition which itself is strongly alkaline and/or is applied to a strongly alkaline substrate.

20. Use according to Claim 19, **characterized in that** the quaternary ammonium compound is a quaternary ammonium salt whose anion is selected from amongst orthosilicate and thiocyanate.

21. Use according to Claim 19 or Claim 20, **characterized in that** the preservative is a preservative as claimed in one of Claims 1 to 12.
